# NOUVEAU FASCICULE DE BREVET EUROPEEN

(11) **EP 2 455 821 B2**
(45) Date de publication et mention de la décision concernant l'opposition: **14.11.2018**
(45) Mention de la délivrance du brevet: 21.10.2015
(21) Numéro de dépôt: 10191774.8
(22) Date de dépôt: 18.11.2010
(51) Int. Cl.: G04B 17/26, G04B 1/22

(54) **Mobile de transmission d'énergie**
Energieübertragungrad
Power transmission gear wheel

(43) Date de publication de la demande: 23.05.2012
(73) Titulaire: Nivarox-FAR S.A., 2400 Le Locle (CH)
(72) Inventeur: Cusin, Pierre, 1423, Villars-Burquin (CH); Mazanowski, Piotr, 2540, Grenchen (CH); Richard, David, 1400, Yverdon-les-Bains (CH); Helfer, Jean-Luc, 2502, Bienne (CH)
(74) Mandataire: Giraud, Eric

(56) Documents cités:
- EP-A1- 1 253 275
- EP-A2- 1 457 844
- EP-A2- 1 580 624
- CH-A- 6 659
- CH-A- 343 897
- DE-A1- 2 714 020
- FR-A1- 2 641 351

## Description

### Domaine de l'invention

L'invention concerne un mobile de transmission d'énergie pour un mécanisme de micro-mécanique ou d'horlogerie, entre au moins un premier mobile émetteur dudit mécanisme d'une part, et au moins un deuxième mobile récepteur dudit mécanisme d'autre part, ledit mobile comportant au moins un degré de liberté en pivotement autour d'un axe théorique de pivotement, ledit mobile étant flexible à géométrie variable tout en étant réalisé de façon monobloc, et comportant des moyens de rappel élastique réalisant une liaison élastique directe ou indirecte entre une première partie axiale et une deuxième partie périphérique, ladite première partie axiale située au voisinage dudit axe théorique de pivotement et coopérant avec ledit premier mobile émetteur ou respectivement le deuxième mobile récepteur, et ladite deuxième partie périphérique éloignée radialement dudit axe théorique de pivotement et coopérant avec ledit deuxième mobile récepteur ou respectivement le premier mobile émetteur, et lesdits moyens de rappel élastique étant agencés pour, selon le cas, absorber, emmagasiner ou libérer de l'énergie lors d'un débattement angulaire en pivotement, autour d'un axe secondaire parallèle ou confondu avec ledit axe théorique de pivotement, entre ladite première partie axiale et ladite deuxième partie périphérique

L'invention concerne encore un mouvement horloger comportant au moins un tel mobile de transmission d'énergie.

L'invention concerne encore une pièce d'horlogerie comportant au moins un tel mouvement, ou/et au moins un tel mobile de transmission d'énergie.

L'invention concerne le domaine de la micro-mécanique, et plus particulièrement le domaine de l'horlogerie.

### Arrière plan de l'invention

La fabrication de mécanismes oscillants pour la micro-mécanique, et en particulier pour l'horlogerie, fait souvent appel à des moyens de rappel élastique constitués en général par des ressorts. D'exécution délicate, ces composants sont de surcroît difficiles à poser, et requièrent une main d'oeuvre qualifiée ou/et un appareillage coûteux. De tels ressorts sont la plupart du temps en acier, de façon à présenter une bonne longévité, en même temps qu'un couple de rappel important. Leur fabrication est très dépendante de la qualité de la matière première utilisée, mais aussi des traitements thermiques effectués. De ce fait la fabrication de ressorts est peu reproductible, et tous les mécanismes qui les incorporent doivent faire l'objet de réglages ou d'ajustements.

Il est, encore, connu des moyens de rappel élastique sous forme de matériaux à mémoire de forme, comme le caoutchouc vulcanisé ou certains élastomères. L'emploi de blocs élastique de ce type est connu en mécanique lourde, souvent en conjugaison avec une fonction de silent-block ou plus généralement d'amortissement. Outre le fait que leur emploi en micro-mécanique est difficile, on constate que précisément ces propriétés d'amortissement des vibrations, et donc d'amortissement des oscillations, vont à l'encontre du but quand on recherche au contraire l'entretien d'une oscillation, avec le minimum d'amortissement.

On connaît des mobiles à bras élastiques simples, en forme de S. Différentes formes de bras élastiques, jumelés ou non avec des dispositifs limiteurs d'amplitude de débattement élastique, sont connus par divers documents. On connaît encore des mobiles à corps intermédiaires élastiques, tels qu'entretoises en mousses ou caoutchouc.

Le document CH 3434 897 A ROLEX décrit un mobile de finissage avec un dispositif élastique de liaison entre sa roue et son pignon, qui se tend sous l'influence du ressort moteur quand la roue d'échappement est à l'arrêt ou en léger recul, et se détend au moment du dégagement, de manière à ce que les dents de la roue d'échappement agissent sur l'ancre avec une force approximativement constante, dès le début de la course d'impulsion.

Le document CH 6 659 A LAMBERT décrit une roue à bras en S.

Le document DE 27 14 020 A1 BEITER décrit une roue en matière plastique avec des rayons en S en lames souples.

Le document EP 1 580 624 A2 PIERRE KUNZ SA décrit un mobile avec une jante reliée au moyeu par des lames ressort permettant le déplacement relatif de la jante par rapport au moyeu.

Le document EP 1 457 844 A2 PIERRE KUNZ SA décrit un mobile avec une roue de transmission reliée à un moyeu par une lame élastique susceptible de subir une déformation.

Le document FR 2 641 351 A1 ALCATEL décrit un pignon anti-bruit avec des bras arqués de couplage élastique entre une couronne intérieure et une couronne extérieure dentée, et des jeux de butées radiales en vis-à-vis et par paires sur des portions chevauchantes de ces bras et de ces couronnes.

Le document EP 1 253 275 A1 SIEMENS décrit une roue avec des entretoises d'amortissement en élastomère assurant la jonction entre des parties internes de rayons reliées à un moyeu, et des parties externes reliées à une couronne.

Le document EP 2 037 335 A2 ENZLER décrit une ancre d'échappement qui pivote autour d'un axe virtuel matérialisé par des bras de fixation élastiques reliés à des points d'ancrages respectifs.

### Résumé de l'invention

L'invention se propose de fournir, pour les domaines de la micro-mécanique et de l'horlogerie, une alternative fiable à l'emploi des ressorts traditionnels comme moyens d'entretien d'une oscillation. Cette alternative est recherchée aussi bien pour des réalisations de micro-mécanique que pour des nano-technologies.

A cet effet, l'invention concerne un mobile de transmission d'énergie pour un mécanisme de micro-mécanique ou d'horlogerie comme défini dans la revendication 1.

L'invention concerne encore un mouvement horloger comportant au moins un tel mobile de transmission d'énergie.

L'invention concerne encore une pièce d'horlogerie comportant au moins un tel mouvement, ou/et au moins un tel mobile de transmission d'énergie.

### Description sommaire des dessins

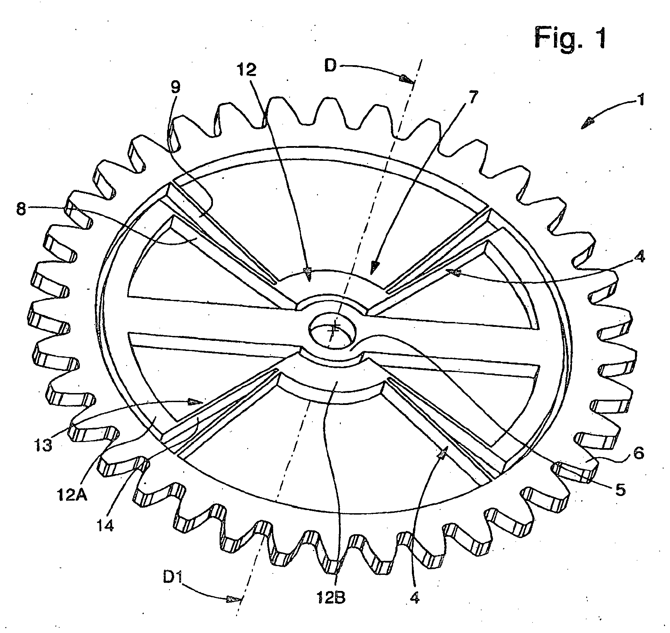

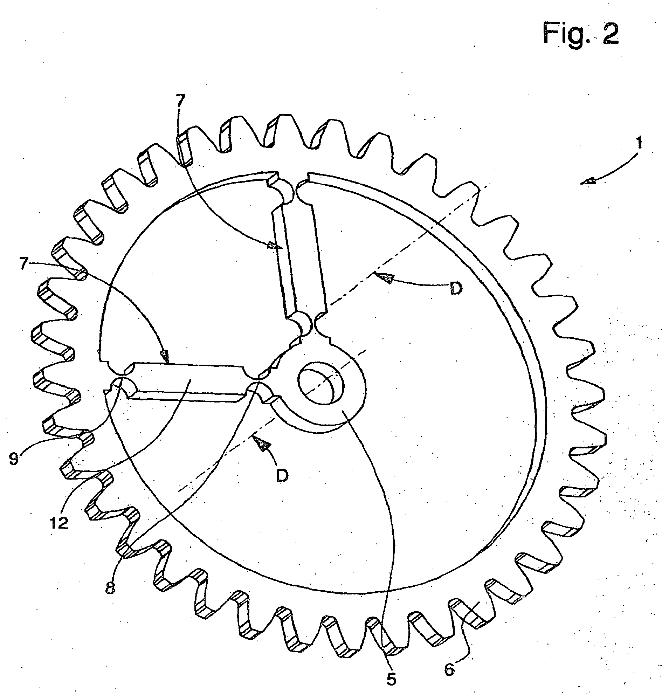

D'autres caractéristiques et avantages de l'invention seront mieux compris à la lecture de la description qui va suivre, en référence aux dessins annexés où les figures 1 et 2 représentent, de façon schématisée et perspective, des modes de réalisation de l'invention.

### Description détaillée des modes de réalisation préférés

L'invention concerne le domaine de la micro-mécanique, et plus particulièrement le domaine de l'horlogerie.

L'invention concerne un mobile de transmission d'énergie, agencé pour découpler l'inertie d'une partie d'un rouage dans un mouvement horloger.

L'invention concerne, dans une application particulière, l'application du mobile de transmission d'énergie à un mécanisme à force constante, où le mobile de transmission d'énergie constitue un réservoir d'énergie « tampon » entre le barillet et l'échappement d'une pièce d'horlogerie, permettant ainsi de transmettre un couple constant à l'échappement. L'homme du métier saura facilement utiliser le mobile selon l'invention pour l'intégrer à un dispositif à force constante Type Jeanneret, tel que décrit par le document « Théorie générale de l'horlogerie, de Léopold Defossez, Chambre Suisse de l'Horlogerie, La Chaux-de-Fonds », tome II, page 129.

L'invention permet, encore, le découplage de l'inertie d'une partie d'un rouage: dans le cas d'un tourbillon, par exemple, l'inertie du rouage à mettre en mouvement à chaque impulsion est grande, et pénalise le rendement de l'échappement. Une roue flexible selon l'invention, interposée entre les éléments de grande inertie et l'échappement, permet à l'échappement de se déplacer rapidement avant que la grande inertie se soit mise en mouvement, améliorant par là même le rendement de l'échappement. Cette application est particulièrement innovante, et utilise avec profit la compacité du mobile selon l'invention.

Si l'invention est utile pour emmagasiner de l'énergie, avant de la délivrer au moment opportun vers un mobile récepteur, elle est aussi tout à fait appropriée pour protéger un organe fragile d'un mouvement contre les chocs, ou, de façon plus générale, contre les fortes accélérations. En particulier, son application à la protection d'un échappement fragile contre les chocs est efficace. En effet, lors de la prise de repos ou lors de chocs sur les aiguilles, le couple transmis dans le rouage peut être momentanément beaucoup plus élevé que le couple du barillet. Si on a typiquement un échappement en matériau fragile, comme du silicium ou un autre matériau obtenu par les technologies MEMS ou obtenu par un procédé « LIGA » ou similaire, éventuellement squelettisé à l'extrême pour son allègement, on risque de le casser. Une flexibilité d'un mobile selon l'invention, judicieusement placé dans le rouage, permet d'absorber une partie de l'énergie du choc. On retrouve une protection analogue à celle offerte par une roue selon le brevet OMEGA EP1870784, avec toutefois la différence est que l'invention permet de disposer d'une partie périphérique rigide et indéformable, ce qui est avantageux s'il s'agit d'une denture.

Les fonctionnalités les plus avantageuses d'exploitation sont :
- protection d'un accouplement par friction lors de chocs ou dans son fonctionnement normal,
- pour les mêmes raisons qu'au point ci-dessus, un accouplement par friction pourrait glisser momentanément pendant un choc (choc extérieur ou prise de repos de l'échappement). Une flexibilité dans le rouage permet de diminuer le pic de couple instantané transmis à travers l'accouplement (par exemple chronographe).
- engrenage sans jeu : superposition de deux planches, liées entre elles par un ressort de rappel angulaire, de manière à prendre en sandwich les dents d'un pignon.

Les moyens utilisés peuvent consister en une planche pivotée librement sur l'axe du pignon, ou un pignon pivoté sur l'axe de la planche, avec ressort de rappel (ressort spiral ou ressort boudin) entre le pignon et la planche.

Il est possible de mettre en oeuvre plusieurs types de guidages flexibles (on combine alors guidage et flexibilité) :
- bras flexibles,
- système élastique, dit papillon,
- pivot RCC (Remote Center Compliance) à quatre cols

Dans une application préférée, tel que visible sur les figures, l'invention concerne un mobile de transmission d'énergie 1 pour un mécanisme de micro-mécanique ou d'horlogerie, entre au moins un premier mobile émetteur du mécanisme d'une part, et au moins un deuxième mobile récepteur du mécanisme d'autre part, le mobile 1 comportant au moins un degré de liberté en pivotement autour d'un axe théorique de pivotement D, caractérisé en ce que le mobile 1 est flexible à géométrie variable tout en étant réalisé de façon monobloc, et comporte des moyens de rappel élastique 4 réalisant une liaison élastique directe ou indirecte entre une première partie axiale 5 et une deuxième partie périphérique 6, la première partie axiale 5 située au voisinage de l'axe théorique de pivotement D et coopérant avec le premier mobile émetteur ou respectivement le deuxième mobile récepteur, et la deuxième partie périphérique 6 éloignée radialement de l'axe théorique de pivotement D et coopérant avec le deuxième mobile récepteur ou respectivement le premier mobile émetteur, et les moyens de rappel élastique 4 étant agencés pour, selon le cas, absorber, emmagasiner ou libérer de l'énergie lors d'un débattement angulaire en pivotement, autour d'un axe secondaire D1 parallèle ou confondu avec l'axe théorique de pivotement D, entre la première partie axiale 5 et la deuxième partie périphérique 6.

Selon une caractéristique de l'invention, la première partie axiale 5 et la deuxième partie périphérique 6 sont coaxiales à l'état libre, et les moyens de rappel élastique 4 sont encore agencés pour maintenir coaxiales la première partie axiale 5 et la deuxième partie périphérique 6 pendant la déformation des moyens de rappel élastique 4.

Selon une caractéristique de l'invention, la deuxième partie périphérique 6 est rigide et indéformable

Selon une caractéristique de l'invention, la liaison élastique est sensiblement plane dans un plan perpendiculaire à l'axe théorique de pivotement D.

Selon une caractéristique de l'invention, le débattement angulaire en pivotement est de plusieurs degrés ou de plusieurs dizaines de degrés.

Selon une caractéristique de l'invention, les moyens de rappel élastique 4 comportent au moins un bras 7 s'étendant entre la première partie axiale 5 et la deuxième partie périphérique 6, et le bras 7 comporte au moins une partie élastique.

Selon une caractéristique de l'invention, le bras 7 est élastique.

Selon une caractéristique de l'invention, les moyens de rappel élastique 4 comportent au moins un bras 7 comportant au moins une partie rigide 12 s'étendant entre la première partie axiale 5 et la deuxième partie périphérique 6 auxquelles il est relié respectivement par au moins une première lame élastique 8 et par au moins une deuxième lame élastique 9.

Selon une caractéristique de l'invention, les moyens de rappel élastique 4 comportent une pluralité de tels bras 7 situés dans des plans parallèles entre eux ou confondus et tous perpendiculaires à l'axe théorique de pivotement D.

Selon une caractéristique de l'invention, les moyens de rappel élastique 4 comportent au moins un bras 7 comportant une pluralité de parties rigides 12 s'étendant entre la première partie axiale 5 et la deuxième partie périphérique 6 auxquelles elles sont reliées respectivement par au moins une première lame élastique 8A d'une première des parties rigides 12A et par au moins une deuxième lame élastique 9B d'une deuxième partie rigide 12B, ces parties rigides 12 étant reliées l'une à l'autre exclusivement par une partie élastique 13.

Selon une caractéristique de l'invention, la partie élastique 13 comporte au moins une lame élastique 14.

Selon une caractéristique de l'invention, le mobile de transmission d'énergie 1 adopte une configuration de type papillon comportant au moins un bras 7 comportant au moins une partie rigide 12 s'étendant entre la première partie axiale 5 et la deuxième partie périphérique 6 auxquelles il est relié respectivement par au moins une première lame élastique 8 et par au moins une deuxième lame élastique 9, la partie rigide 12 constituant une masse intermédiaire mobile sensiblement en pivotement autour de l'axe théorique de pivotement D.

Selon une caractéristique de l'invention, le mobile de transmission d'énergie 1 adopte une configuration de type pivot RCC à quatre cols, comportant deux bras 7 non alignés comportant chacun au moins une partie rigide 12 s'étendant entre la première partie axiale 5 et la deuxième partie périphérique 6 auxquelles il est relié respectivement par au moins une première lame élastique 8 et par au moins une deuxième lame élastique 9.

Selon une caractéristique de l'invention, les deux bras 7 forment entre eux un angle centré sensiblement sur l'axe théorique de pivotement D et voisin de 90°.

Selon une caractéristique de l'invention, les moyens de rappel élastique 4 ont un débattement angulaire limité à une course en pivotement de la première partie 5 par rapport à la deuxième partie 6 déterminée par des moyens de limitation en débattement angulaire.

Selon une caractéristique de l'invention, les moyens de rappel élastique 4 ont une raideur très inférieure à celle de la première partie 5 et de la deuxième partie 6, dans un rapport inférieur à 0.30 par rapport à la plus faible des raideurs de la première partie 5 ou de la deuxième partie 6.

Selon une caractéristique de l'invention, les moyens de rappel élastique 4 sont constitués de lames sensiblement radiales par rapport à l'axe théorique de pivotement D.

Selon une caractéristique de l'invention, le mobile de transmission d'énergie 1 est réalisé dans un matériau micro-usinable, ou silicium, ou quartz ou un de leurs composés, ou un alliage issu de la technologie dés MEMS, ou un alliage tel qu'obtenu par le procédé « LIGA », ou un matériau au moins partiellement amorphe. Dans une réalisation particulière, il est réalisé en une combinaison de certains de ces matériaux, le matériau étant un matériau rigide de module d'Young supérieur à 80000 MPa.

L'invention concerne encore un mouvement horloger comportant au moins un tel mobile de transmission d'énergie 1.

L'invention concerne encore une pièce d'horlogerie comportant au moins un tel mouvement, ou/et au moins un tel mobile de transmission d'énergie 1.

L'invention concerne encore un tel mobile de transmission d'énergie 1, agencé pour découpler l'inertie d'une partie d'un rouage dans un mouvement horloger comportant d'une part un échappement et d'autre part un second mobile d'inertie supérieure à celle de cet échappement, par l'interposition du mobile de transmission d'énergie 1 soit directement, soit dans un rouage, entre l'échappement et le second mobile, de façon à autoriser un pivotement rapide de l'échappement avant que le second mobile soit mis en mouvement à chaque impulsion.

L'invention concerne encore un mobile de transmission d'énergie 1, où le second mobile est un tourbillon ou un carrousel.

L'invention concerne encore un mobile de transmission d'énergie 1, où l'échappement comporte une roue d'échappement constituée par un tel mobile de transmission d'énergie 1.

L'invention concerne encore un tel mobile de transmission d'énergie 1, agencé pour absorber une énergie excédentaire dans un rouage d'un mouvement horloger, quand un couple transmis au rouage par un choc ou une forte accélération ou lors de la prise de repos de l'échappement est momentanément beaucoup plus élevé que le couplé d'un barillet alimentant le mouvement en énergie, en réalisant au moins un des éléments du rouage sous la forme d'un tel mobile de transmission d'énergie 1.

L'invention concerne encore un tel mobile de transmission d'énergie 1 pour un tel mouvement horloger comportant un échappement, où cet échappement comporte une roue d'échappement constituée par un telmobile de transmission d'énergie 1.

L'invention concerne encore un tel mobile de transmission d'énergie 1, agencé pour absorber une énergie excédentaire dans un mouvement horloger comportant un rouage et au moins un accouplement par friction, quand un couple transmis au rouage par un choc ou une forte accélération ou lors de la prise de repos de l'échappement est momentanément beaucoup plus élevé que le couple d'un barillet alimentant ce mouvement en énergie, en réalisant au moins un des éléments du rouage sous la forme d'un tel mobile de transmission d'énergie 1, pour diminuer le pic de couple instantané transmis à travers cet accouplement par friction.

L'invention concerne encore un tel mobile de transmission d'énergie 1 pour un mouvement horloger de chronographe comportant au moins un accouplement par friction.

L'invention concerne encore un tel mobile de transmission d'énergie 1 pour un mouvement horloger comportant, entre un barillet de stockage d'énergie et un échappement, un rouage comportant au moins un tel mobile de transmission d'énergie 1 pour constituer un réservoir d'énergie tampon entre ce barillet et cet échappement, pour transmettre un couple constant à cet échappement.

L'invention concerne encore un tel mobile de transmission d'énergie 1 pour un mouvement horloger comportant deux planches liées entre elles par un ressort de rappel angulaire constitué par un tel mobile de transmission d'énergie 1, pour prendre en sandwich les dents d'un pignon, et constituer un mécanisme d'engrenage sans jeu.

L'invention concerne encore un tel mobile de transmission d'énergie 1 dans un mouvement horloger dans lequel le premier mobile émetteur ou bien le deuxième mobile récepteur du mécanisme est maintenu fixe en ancrage par rapport à une platine ou à un pont que comporte ce mouvement horloger.

Bien entendu, la présente invention ne se limite pas à l'exemple illustré mais est susceptible de diverses variantes et modifications qui apparaîtront à l'homme de l'art, dans le cadre défini par les revendications annexées.

## Revendications

1. Mobile de transmission d'énergie (1) pour un mécanisme de micro-mécanique ou d'horlogerie, entre au moins un premier mobile émetteur dudit mécanisme d'une part, et au moins un deuxième mobile récepteur dudit mécanisme d'autre part, ledit mobile (1) comportant au moins un degré de liberté en pivotement autour d'un axe théorique de pivotement (D), ledit mobile (1) étant flexible à géométrie variable tout en étant réalisé de façon monobloc, et comportant des moyens de rappel élastique (4) réalisant une liaison élastique directe ou indirecte entre une première partie axiale (5) et une deuxième partie périphérique (6), ladite première partie axiale (5) située au voisinage dudit axe théorique de pivotement (D) et coopérant avec ledit premier mobile émetteur ou respectivement le deuxième mobile récepteur, et ladite deuxième partie périphérique (6) éloignée radialement dudit axe théorique de pivotement (D) et coopérant avec ledit deuxième mobile récepteur ou respectivement le premier mobile émetteur, et lesdits moyens de rappel élastique (4) étant agencés pour, selon le cas, absorber, emmagasiner ou libérer de l'énergie lors d'un débattement angulaire en pivotement, autour d'un axe secondaire (D1) parallèle ou confondu avec ledit axe théorique de pivotement (D), entre ladite première partie axiale (5) et ladite deuxième partie périphérique (6), **caractérisé en ce que** lesdits moyens de rappel élastique (4) sont constitués de lames sensiblement radiales par rapport audit axe théorique de pivotement (D), ledit mobile (1) adoptant une configuration de type papillon comportant au moins un bras (7) comportant au moins une partie rigide (12) s'étendant entre ladite première partie axiale (5) et ladite deuxième partie périphérique (6) auxquelles il est relié respectivement par au moins une première lame élastique (8) et par au moins une deuxième lame élastique (9), ladite partie rigide (12) constituant une masse intermédiaire mobile sensiblement en pivotement autour dudit axe théorique de pivotement (D).

2. Mobile de transmission d'énergie (1) selon la revendication 1, **caractérisé en ce que** ladite première partie axiale (5) et ladite deuxième partie périphérique (6) sont coaxiales à l'état libre, et que lesdits moyens de rappel élastique (4) sont encore agencés pour maintenir coaxiales ladite première partie axiale (5) et ladite deuxième partie périphérique (6) pendant la déformation desdits moyens de rappel élastique (4).

3. Mobile de transmission d'énergie (1) selon l'une des revendications précédentes, **caractérisé en ce que** lesdits moyens de rappel élastique (4) comportent au moins un bras (7) s'étendant entre ladite première partie axiale (5) et ladite deuxième partie périphérique (6), et que ledit bras (7) comporte au moins une partie élastique.

4. Mobile de transmission d'énergie (1) selon l'une des revendications précédentes, **caractérisé en ce que** lesdits moyens de rappel élastique (4) comportent au moins un bras (7) comportant au moins une partie rigide (12) s'étendant entre ladite première partie axiale (5) et ladite deuxième partie périphérique (6) auxquelles il est relié respectivement par au moins une première lame élastique (8) et par au moins une deuxième lame élastique (9).

5. Mobile de transmission d'énergie (1) selon l'une des revendications précédentes, **caractérisé en ce que** lesdits moyens de rappel élastique (4) ont un débattement angulaire limité à une course en pivotement de ladite première partie (5) par rapport à ladite deuxième partie (6) déterminée par des moyens de limitation en débattement angulaire.

6. Mobile de transmission d'énergie (1) selon l'une des revendications précédentes, **caractérisé en ce qu'**il est réalisé dans un matériau micro-usinable, ou silicium, ou quartz ou un de leurs composés, ou un matériau au moins partiellement amorphe.

7. Mouvement horloger comportant au moins un mobile de transmission d'énergie (1) selon l'une des revendications 1 à 6.

8. Mouvement horloger selon la revendication précédente, **caractérisé en ce que**, dans ledit mouvement, ledit premier mobile émetteur ou bien ledit deuxième mobile récepteur dudit mécanisme est maintenu fixe en ancrage par rapport à une platine ou à un pont que comporte ledit mouvement horloger.

9. Mouvement horloger selon l'une des revendications 7 ou 8, **caractérisé en ce qu'**il comporte un rouage, et, d'une part un échappement et d'autre part un second mobile, ou un tourbillon, ou un carrousel, d'inertie supérieure à celle dudit échappement, et **en ce que** ledit mobile de transmission d'énergie (1) est interposé entre ledit échappement et ledit second mobile, soit directement, soit dans un rouage, pour découpler l'inertie d'une partie dudit rouage, de façon à autoriser un pivotement rapide dudit échappement avant que ledit second mobile soit mis en mouvement à chaque impulsion.

10. Mouvement horloger selon la revendication précédente, **caractérisé en ce que** ledit échappement comporte une roue d'échappement constituée par un dit mobile de transmission d'énergie (1).

11. Mouvement horloger selon l'une des revendications 7 ou 8, **caractérisé en ce qu'**il comporte un mécanisme d'échappement, et un rouage dont au moins un des éléments est constitué par un dit mobile de transmission d'énergie (1), pour absorber une énergie excédentaire dans ledit rouage, quand un couple transmis audit rouage par un choc ou une forte accélération ou lors de la prise de repos de l'échappement est momentanément beaucoup plus élevé que le couple d'un barillet alimentant ledit mouvement en énergie.

12. Mouvement horloger selon la revendication précédente, **caractérisé en ce que** ledit échappement comporte une roue d'échappement constituée par un dit mobile de transmission d'énergie (1).

13. Mouvement horloger selon l'une des revendications 7 ou 8, **caractérisé en ce qu'**il comporte un mécanisme d'échappement, un rouage et au moins un accouplement par friction, et dont au moins un des éléments dudit rouage est constitué par un dit mobile de transmission d'énergie (1), pour absorber une énergie excédentaire dans ledit mouvement horloger, et pour diminuer le pic de couple instantané transmis à travers ledit accouplement par friction, quand un couple transmis audit rouage par un choc ou une forte accélération ou lors de la prise de repos de l'échappement est momentanément beaucoup plus élevé que le couple d'un barillet alimentant ledit mouvement en énergie.

14. Mouvement horloger selon la revendication précédente, **caractérisé en ce qu'**il est un mouvement de chronographe comportant au moins un accouplement par friction.

15. Mouvement horloger selon l'une des revendications 7 ou 8, **caractérisé en ce qu'**il comporte deux planches liées entre elles par un ressort de rappel angulaire constitué par un dit mobile de transmission d'énergie (1), pour prendre en sandwich les dents d'un pignon, et constituer un mécanisme d'engrenage sans jeu: superposition de deux planches, liées entre elles par un ressort de rappel angulaire, de manière à prendre en sandwich les dents d'un pignon.

16. Mouvement horloger selon l'une des revendications 7 à 15, **caractérisé en ce qu'**il comporte, entre un barillet de stockage d'énergie et un échappement, un rouage comportant au moins un dit mobile de transmission d'énergie (1) pour constituer un réservoir d'énergie tampon entre ledit barillet et ledit échappement, pour transmettre un couple constant audit échappement.

17. Pièce d'horlogerie comportant au moins un mouvement selon l'une des revendications 7 à 16, ou/et au moins un mobile de transmission d'énergie (1) selon l'une des revendications 1 à 6.

## Patentansprüche

1. Bewegliches Element (1) für einen mikromechanischen Mechanismus oder Uhrenmechanismus zur Übertragung von Energie zwischen wenigstens einem ersten beweglichen Senderelement des Mechanismus einerseits und wenigstens einem zweiten beweglichen Empfängerelement des Mechanismus andererseits, wobei das bewegliche Element (1) wenigstens einen Rotationsfreiheitsgrad um eine theoretische Rotationsachse (D) besitzt, wobei das bewegliche Element (1) biegsam mit veränderlicher Geometrie ist und dennoch einteilig hergestellt ist und elastische Rückstellmittel (4) umfasst, die eine direkte oder indirekte elastische Verbindung zwischen einem ersten axialen Teil (5) und einem zweiten Umfangsteil (6) verwirklichen, wobei sich der erste axiale Teil (5) in der Umgebung der theoretischen Rotationsachse (D) befindet und mit dem ersten beweglichen Senderelement bzw. mit dem zweiten beweglichen Empfängerelement zusammenwirkt und das zweite Umfangsteil (6) von der theoretischen Rotationsachse (D) radial entfernt ist und mit dem zweiten beweglichen Empfängerelement bzw. mit dem ersten beweglichen Senderelement zusammenwirkt, und wobei die elastischen Rückstellmittel (4) dafür ausgelegt sind, bei einem Rotationswinkelausschlag um eine sekundäre Achse (D1), die zu der theoretischen Rotationsachse (D) parallel ist oder mit dieser zusammenfällt, zwischen dem ersten axialen Teil (5) und dem zweiten Umfangsteil (6) Energie je nach Fall zu absorbieren, zu speichern oder freizugeben, **dadurch gekennzeichnet, dass** die elastischen Rückstellmittel (4) durch in Bezug auf die theoretische Rotationsachse (D) im Wesentlichen radiale Laschen gebildet sind, wobei das bewegliche Element (1) eine Konfiguration des Schmetterlingstyps besitzt, die wenigstens einen Arm (7) umfasst, der wenigstens einen starren Teil (12) aufweist, der sich zwischen dem ersten axialen Teil (5) und dem zweiten Umfangsteil (6) erstreckt, mit denen er über wenigstens eine elastische Lasche (8) bzw. über wenigstens eine zweite elastische Lasche (9) verbunden ist, wobei der starre Teil (12) eine Zwischenmasse, die im Wesentlichen um die theoretische Rotationsachse (D) rotatorisch beweglich ist, bildet.

2. Bewegliches Element (1) zur Übertragung von Energie nach Anspruch 1, **dadurch gekennzeichnet, dass** der erste axiale Teil (5) und der zweite Umfangsteil (6) im freien Zustand koaxial sind und dass die elastischen Rückstellmittel (4) ferner dafür ausgelegt sind, den ersten axialen Teil (5) und den zweiten Umfangsteil (6) während der Verformung der elastischen Rückstellmittel (4) koaxial zu halten.

3. Bewegliches Element (1) zur Übertragung von Energie nach einem der vorhergehenden Ansprüche, **dadurch gekennzeichnet, dass** die elastischen Rückstellmittel (4) wenigstens einen Arm (7) umfassen, der sich zwischen dem ersten axialen Teil (5) und dem zweiten Umfangsteil (6) erstreckt, und dass der Arm (7) wenigstens einen elastischen Teil aufweist.

4. Bewegliches Element (1) zur Übertragung von Energie nach einem der vorhergehenden Ansprüche, **dadurch gekennzeichnet, dass** die elastischen Rückstellmittel (4) wenigstens einen Arm (7) umfassen, der wenigstens einen starren Teil (12) aufweist, der sich zwischen dem ersten axialen Teil (5) und dem zweiten Umfangsteil (6) erstreckt, mit denen er über wenigstens eine erste elastische Lasche (8) bzw. über wenigstens eine zweite elastische Lasche (9) verbunden ist.

5. Bewegliches Element (1) zur Übertragung von Energie nach einem der vorhergehenden Ansprüche, **dadurch gekennzeichnet, dass** die elastischen Rückstellmittel (4) einen begrenzten Winkelausschlag auf einer Rotationsbahn des ersten Teils (5) in Bezug auf den zweiten Teil (6) besitzen, der durch Winkelausschlag-Begrenzungsmittel bestimmt ist.

6. Bewegliches Element (1) zur Übertragung von Energie nach einem der vorhergehenden Ansprüche, **dadurch gekennzeichnet, dass** es aus einem mikrobearbeitbaren Material oder Silicium oder Quarz oder einer ihrer Komponenten oder aus einem wenigstens teilweise amorphen Material verwirklicht ist.

7. Uhrwerk, das wenigstens ein bewegliches Element (1) zur Übertragung von Energie nach einem der Ansprüche 1 bis 6 umfasst.

8. Uhrwerk nach dem vorhergehenden Anspruch, **dadurch gekennzeichnet, dass** in dem Werk das erste bewegliche Senderelement oder aber das zweite bewegliche Empfängerelement des Mechanismus fest verankert in Bezug auf eine Platine oder auf eine Brücke, die das Uhrwerk aufweist, gehalten wird.

9. Uhrwerk nach einem der Ansprüche 7 oder 8, **dadurch gekennzeichnet, dass** es ein Räderwerk und einerseits eine Hemmung und andererseits ein zweites bewegliches Element oder ein Tourbillon oder ein Karussell mit einer Trägheit, die größer als jene der Hemmung ist, umfasst, und dass das bewegliche Element (1) zur Übertragung von Energie zwischen die Hemmung und das zweite bewegliche Element entweder direkt oder in einem Räderwerk eingefügt ist, um die Trägheit eines Teils des Räderwerks zu entkoppeln, derart, dass bei jedem Impuls eine schnelle Rotation der Hemmung zugelassen ist, bevor das zweite bewegliche Element in Bewegung gesetzt wird.

10. Uhrwerk nach dem vorhergehenden Anspruch, **dadurch gekennzeichnet, dass** die Hemmung ein Hemmungsrad umfasst, das durch ein solches bewegliches Element (1) zur Übertragung von Energie gebildet ist.

11. Uhrwerk nach einem der Ansprüche 7 oder 8, **dadurch gekennzeichnet, dass** es einen Hemmungsmechanismus und ein Räderwerk umfasst, wovon wenigstens eines der Elemente durch eine solches bewegliches Element (1) zur Übertragung von Energie gebildet ist, um überschüssige Energie in dem Räderwerk zu absorbieren, wenn ein Drehmoment, das an das Räderwerk durch einen Stoß oder eine starke Beschleunigung oder dann, wenn die Hemmung aus dem Ruhezustand geholt wird, übertragen wird, plötzlich viel größer ist als das Drehmoment eines Federgehäuses, das das Werk mit Energie versorgt.

12. Uhrwerk nach dem vorhergehenden Anspruch, **dadurch gekennzeichnet, dass** die Hemmung ein Hemmungsrad umfasst, das durch dieses bewegliche Element (1) zur Übertragung von Energie gebildet ist.

13. Uhrwerk nach einem der Ansprüche 7 oder 8, **dadurch gekennzeichnet, dass** es einen Hemmungsmechanismus, ein Räderwerk und wenigstens eine Reibkopplung umfasst, wobei wenigstens eines der Elemente des Räderwerks durch ein solches bewegliches Element (1) zur Übertragung von Energie gebildet ist, um überschüssige Energie in dem Uhrwerk zu absorbieren und um die momentane Drehmomentspitze zu verringern, die über die Reibkopplung übertragen wird, wenn ein Drehmoment, das an das Räderwerk durch einen Stoß oder eine starke Beschleunigung oder dann, wenn die Hemmung aus dem Ruhezustand geholt wird, plötzlich viel größer ist als das Drehmoment eines Federgehäuses, das das Werk mit Energie versorgt.

14. Uhrwerk nach dem vorhergehenden Anspruch, **dadurch gekennzeichnet, dass** es ein Chronographenwerk ist, das wenigstens eine Reibkopplung umfasst.

15. Uhrwerk nach einem der Ansprüche 7 oder 8, **dadurch gekennzeichnet, dass** es zwei Stege umfasst, die miteinander über eine Winkelrückstellfeder verbunden sind, die durch ein solches bewegliches Element (1) zur Übertragung von Energie gebildet ist, um die Zähne eines Ritzels zwischen ihnen einzubetten und um einen spielfreien Getriebemechanismus: Überlagerung von zwei Stegen, die miteinander durch eine Winkelrückstellfeder verbunden sind, zu bilden, derart, dass sie die Zähne eines Ritzels zwischen sich einbetten.

16. Uhrwerk nach einem der Ansprüche 7 bis 15, **dadurch gekennzeichnet, dass** es zwischen einem Energiespeicher-Federgehäuse und einer Hemmung ein Räderwerk umfasst, das wenigstens ein solches bewegliches Element (1) zur Übertragung von Energie aufweist, um zwischen dem Federgehäuse und der Hemmung einen Energiepufferspeicher zu bilden, um an die Hemmung ein konstantes Drehmoment zu übertragen.

17. Zeitmessgerät, das wenigstens ein Uhrwerk nach einem der Ansprüche 7 bis 16 und/oder wenigstens ein bewegliches Element (1) zur Übertragung von Energie nach einem der Ansprüche 1 bis 6 umfasst.

## Claims

1. Wheel set (1) for a micromechanical or timepiece mechanism for the transmission of power between at least a first transmission wheel set of said mechanism on the one hand, and at least a second receiver wheel set of said mechanism on the other hand, said wheel set (1) including at least one pivoting degree of freedom about a theoretical axis of pivoting (D), said wheel set (1) being flexible and having a variable geometry while being made in a one-piece manner, and including elastic return means (4) forming a direct or indirect elastic connection between a first axial part (5) and a second peripheral part (6), said first axial part (5) located in proximity to said theoretical axis of pivoting (D) and cooperating with said first transmission wheel set or respectively the second receiver wheel set, and said second peripheral part (6) radially remote from said theoretical axis of pivoting (D) and cooperating with said second receiver wheel set or respectively the first transmission wheel set, and said elastic return means (4) being arranged, depending on the case, to absorb, store or release power during an angular pivoting motion, about a secondary axis (D1) parallel to or coincident with said theoretical axis of pivoting (D), between said first axial part (5) and said second peripheral part (6), **characterized in that** said elastic return means (4) are formed of substantially radial strips relative to said theoretical axis of pivoting (D), said wheel set (1) adopting a butterfly type configuration including at least one arm (7) having at least one rigid part (12) extending between said first axial part (5) and said second peripheral part (6) to which the arm is respectively connected by at least a first elastic strip (8) and by at least a second elastic strip (9), said rigid part (12) forming an intermediate mass substantially pivotable about said theoretical axis of pivoting (D).

2. Power transmission wheel set (1) according to claim 1, **characterized in that** said first axial part (5) and said second peripheral part (6) are coaxial in the free state, and **in that** said elastic return means (4) are also arranged to keep said first axial part (5) and said second peripheral part (6) coaxial during the deformation of said elastic return means (4).

3. Power transmission wheel set (1) according to any of the preceding claims, **characterized in that** said elastic return means (4) include at least one arm (7) extending between said first axial part (5) and said second peripheral part (6), and **in that** said arm (7) includes at least one elastic part.

4. Power transmission wheel set (1) according to any of the preceding claims, **characterized in that** said elastic return means (4) include at least one arm (7) including at least one rigid part (12) extending between said first axial part (5) and said second peripheral part (6) to which the arm is respectively connected by at least a first elastic strip (8) and by at least a second elastic strip (9).

5. Power transmission wheel set (1) according to any of the preceding claims, **characterized in that** the angular motion of said elastic return means (4) is limited to a pivoting travel of said first part (5) relative to said second part (6) determined by angular motion limiting means.

6. Power transmission wheel set (1) according to any of the preceding claims, **characterized in that** the wheel set is made of a micromachinable material or silicon or quartz or a compound thereof, or of an at least partially amorphous material.

7. Timepiece movement including at least one power transmission wheel set (1) according to any of claims 1 to 6.

8. Timepiece movement according to the preceding claim, **characterized in that**, in said movement, said first transmission wheel set or said second receiver wheel set of said mechanism is fixedly anchored relative to a main plate or to a bridge comprised in said timepiece movement.

9. Timepiece movement according to any of claims 7 or 8, **characterized in that** the movement includes a gear train and, on the one hand an escapement, and on the other hand a second wheel set, or a tourbillon, or a karussel, of higher inertia than that of said escapement, and **in that** said power transmission wheel set (1) is inserted between said escapement and said second wheel set, either directly, or in a gear train, to decouple the inertia of one part of said gear train, so as to allow rapid pivoting of said escapement before said second wheel set is set in motion on each impulse.

10. Timepiece movement according to the preceding claim, **characterized in that** said escapement includes an escape wheel formed by a said power transmission wheel set (1).

11. Timepiece movement according to any of claims 7 or 8, **characterized in that** the movement includes an escapement mechanism, and a gear train at least one element of which is formed by a said power transmission wheel set (1), to absorb excess power in said gear train, when a torque transmitted to said gear train by a shock or a high acceleration or during the locking of the escapement is momentarily much higher than the torque of a barrel supplying said movement with power.

12. Timepiece movement according to the preceding claim, **characterized in that** said escapement includes an escape wheel formed by a said power transmission wheel set (1).

13. Timepiece movement according to any of claims 7 or 8, **characterized in that** the movement includes an escapement mechanism, a gear train and at least one friction coupling, and wherein at least of the elements of said gear train is formed by a said power transmission wheel set (1), to absorb excess power in said timepiece movement, and to decrease the peak in instantaneous torque transmitted through said friction coupling, when a torque transmitted to said gear train by a shock or by a high acceleration or during the locking of the escapement is momentarily much higher than the torque of a barrel supplying said movement with power.

14. Timepiece movement according to the preceding claim, **characterized in that** the movement is a chronograph movement including a least one friction coupling.

15. Timepiece movement according to any of claims 7 or 8, **characterized in that** the movement includes two plates connected to each other by an angular return spring formed by a said power transmission wheel set (1), to sandwich the teeth of a pinion, and to form a gear mechanism with no play: superposition of two plates, connected to each other by an angular return spring, so as to sandwich the teeth of a pinion.

16. Timepiece movement according to any of claims 7 to 15, **characterized in that** the movement includes, between a power storage barrel and an escapement, a gear train including at least one said power transmission wheel set (1) to form a buffer power storage between said barrel and said escapement, in order to transmit a constant torque to said escapement.

17. Timepiece including at least one movement according to any claims 7 to 16, and/or at least one power transmission wheel set (1) according to any of claims 1 to 6.
